# EUROPEAN PATENT APPLICATION

(11) **EP 4 245 867 A1**
(43) Date of publication of application: **20.09.2023**
(21) Application number: 22742660.8
(22) Date of filing: 20.01.2022
(51) Int. Cl.: C21D 8/12, C22C 38/00, C22C 38/14, C22C 38/60, H01F 1/147

(54) **METHOD FOR PRODUCING GRAIN-ORIENTED ELECTRICAL STEEL SHEET**

(30) Priority: 21.01.2021 JP 2021008319
(71) Applicant: JFE Steel Corporation, Tokyo 100-0011 (JP)
(72) Inventor: YAMADA, Takuya, Tokyo 100-0011 (JP); WATANABE, Makoto, Tokyo 100-0011 (JP); TERASHIMA, Takashi, Tokyo 100-0011 (JP)
(74) Representative: Grünecker Patent- und Rechtsanwälte PartG mbB
(86) International application number: PCT/JP2022/002057
(87) International publication number: WO 2022/158541

(57) **Abstract**

Provided is a method for stably producing a grain-oriented electrical steel sheet with excellent magnetic properties by effectively purifying inhibitors. The method for producing a grain-oriented electrical steel sheet includes using a steel slab containing a predetermined amount of at least one of Ti, Zr, Hf, V, Nb, and Ta, and applying an annealing separator, in which 1 part by mass to 10 parts by mass of a metal compound is added with respect to 100 parts by mass of MgO, on the steel sheet surface with a ratio of particles with a particle size of 1 µm or more in the metal compound being 0.0010 particles/µm² or less.

## Description

### TECHNICAL FIELD

This disclosure relates to a method for producing a grain-oriented electrical steel sheet, especially to a method for stably producing a grain-oriented electrical steel sheet with excellent magnetic properties by accelerating purification of Ti, Zr, Hf, V, Nb, and Ta when these elements are used as inhibitors.

### BACKGROUND

A grain-oriented electrical steel sheet is a soft magnetic material mainly used in an iron core of a transformer and other devices, and it is required to have magnetic properties of low iron loss and high magnetic flux density. Such a grain-oriented electrical steel sheet is produced by integrating {110}<001> orientation, called Goss orientation, in the microstructure of the steel sheet utilizing the secondary recrystallization phenomenon.

As a method for increasing the integration degree of the Goss orientation, it is common to use precipitates called inhibitors, such as MnS, MnSe, and AlN, to control secondary recrystallization.

In recent years, the demand for grain-oriented electrical steel sheets with lower iron loss and higher magnetic flux density is increasing for the purpose of energy saving. For example, JP H06-025747 A (PTL 1) and JP 2008-115421 A (PTL 2) propose methods of using Nb and other elements as inhibitors as a method for producing such a grain-oriented electrical steel sheet. Nb and other elements can enhance the grain growth inhibiting capability and increase the integration degree of the Goss orientation.

The inhibitors need to be eliminated (purified) from the steel. For example, JP H09-143562 A (PTL 3) proposes a method for accelerating purification of nitrogen by reducing the nitrogen partial pressure in purification annealing, as a method for accelerating purification of inhibitors.

### CITATION LIST

### Patent Literature

PTL 1: JP H06-025747 A
PTL 2: JP 2008-115421 A
PTL 3: JP H09-143562 A

### SUMMARY

### (Technical Problem)

In a case of using inhibitors as described above, the inhibitors obstruct domain wall displacement and increase iron loss if they remain in a product. Therefore, during final annealing, it is necessary to decompose and eliminate (purify) the inhibitors from the steel by performing secondary recrystallization annealing followed by purification annealing at high temperatures.

However, when Ti, Zr, Hf, V, Nb, or Ta (hereinafter also referred to as "Nb and other elements") is used as an inhibitor as in the methods described in PTL 1 and PTL 2, there is a problem that the element cannot be purified. That is, Nb and other elements that have been decomposed at high temperatures will precipitate again, and these precipitates increase iron loss.

Further, although the method described in PTL 3 can purify nitrogen, it cannot purify Nb and other elements, and there is still a problem of increased iron loss.

It could thus be helpful to propose a method for stably producing a grain-oriented electrical steel sheet with excellent magnetic properties by effectively purifying inhibitors such as Nb.

### (Solution to Problem)

As a result of intensive studies, we newly discovered that, by performing final annealing using an annealing separator in which metal compounds are uniformly dispersed, the oxidation of Ti, Zr, Hf, V, Nb, and Ta is accelerated, and the purification is accelerated.

The present disclosure is based on the aforementioned discoveries and further studies. Specifically, primary features of the present disclosure are as follows.
[1] A method for producing a grain-oriented electrical steel sheet, comprising: preparing a steel slab containing, in mass%, C: 0.01 % to 0.1 %, Si: 2.0 % to 5.0 %, and Mn: 0.01 % to 1 %, and further containing at least one selected from the group consisting of Ti, Zr, Hf, V, Nb, and Ta in a total amount of 0.0010 % to 0.0100 %, with the balance being Fe and inevitable impurities, subjecting the steel slab to hot rolling, to cold rolling once or twice or more with intermediate annealing performed therebetween, and then to decarburization annealing, then applying an annealing separator, and performing final annealing, wherein
   the annealing separator is added with 1 part by mass to 10 parts by mass of a metal compound with respect to 100 parts by mass of MgO, and the annealing separator is applied on a surface of the steel sheet with a ratio of particles with a particle size of 1 µm or more in the metal compound being 0.0010 particles/µm² or less.
[2] The method for producing a grain-oriented electrical steel sheet according to aspect [1], wherein the metal compound is at least one of oxide, hydroxide, nitrate, or sulfate of at least one selected from the group consisting of Ti, Cr, Mo, W, Mn, Zn, Sn, Pb, Sb, and Bi.
[3] The method for producing a grain-oriented electrical steel sheet according to aspect [1] or [2], wherein the steel slab further contains, in mass%, at least one selected from the group consisting of B: 0.0001 % to 0.005 %, N: 0.002 % to 0.01 %, Al: 0.004 % to 0.04 %, P: 0.005 % to 0.1 %, S: 0.002 % to 0.03 %, Cr: 0.01 % to 0.5 %, Ni: 0.01 % to 1.5 %, Cu: 0.01 % to 0.5 %, Se: 0.002 % to 0.03 %, Mo: 0.005 % to 0.1 %, Sn: 0.005 % to 0.5 %, Sb: 0.005 % to 0.5 %, and Bi: 0.001 % to 0.05 %.

### (Advantageous Effect)

According to the present disclosure, it is possible to stably produce a grain-oriented electrical steel sheet with excellent magnetic properties even when at least one of Ti, Zr, Hf, V, Nb, and Ta is used as an inhibitor, where final annealing is performed using an annealing separator in which metal compounds are uniformly dispersed to accelerate the purification.

### BRIEF DESCRIPTION OF THE DRAWINGS

In the accompanying drawings:

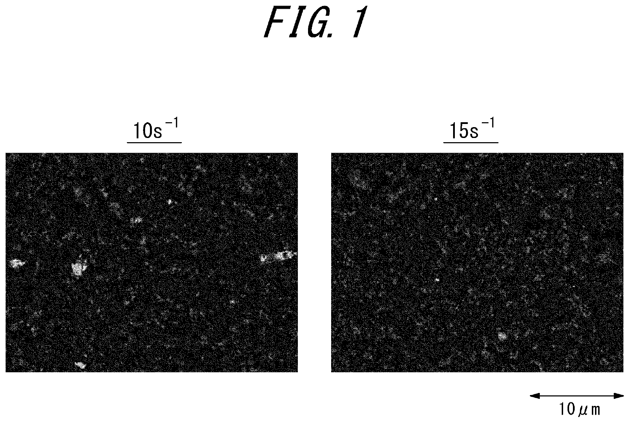

FIG. 1 compares the dispersion state of SnO₂ when stirring is performed at shear rates of 10 s⁻¹ and 15 s⁻¹.

### DETAILED DESCRIPTION

The following describes the experiments that led to the present disclosure.

Steel slabs containing, in mass%, C: 0.03 %, N: 0.004 %, Al: 0.007 %, Si: 3.2 %, and Mn: 0.06 %, and further containing Nb: 0.0070 % as an inhibitor component, with the balance being Fe and inevitable impurities, were heated at 1380 °C for 30 minutes, and then subjected to hot rolling, then cold rolling, then intermediate annealing at 1050 °C for 1 minute, and then cold rolling again to obtain cold-rolled sheets with a thickness of 0.23 mm. The cold-rolled sheets were subjected to decarburization annealing at 840 °C for 2 minutes in a wet hydrogen atmosphere.

Eleven cold-rolled sheets after subjection to decarburization annealing were prepared as described above. Next, as indicated in Table 1, an annealing separator, in which 5 parts by mass of SnO₂ was added with respect to 100 parts by mass of MgO, was applied to six of the eleven cold-rolled sheets, and an annealing separator of MgO was applied to the remaining five cold-rolled sheets. All of the annealing separators were stirred at different shear rates and then applied to the surface of the cold-rolled sheets. After performing secondary recrystallization annealing at 850 °C for 50 hours, purification annealing was performed at 1200 °C for 5 hours in a dry hydrogen atmosphere. Further, a coating mainly composed of phosphate was applied, and flattening annealing was performed at 850 °C for 1 minute to obtain test pieces. Next, the test pieces were subjected to magnetic property measurement, and Nb analysis was performed after the film was removed from the test pieces.

The magnetic property measurement was performed in accordance with JISC2550, and the component analysis was performed by emission spectrochemical analysis. Further, the same measurements as those described above were also performed in the case of using an annealing separator with no SnO₂ added.

The results of the measurements are listed in Table 1.

### [Table 1]

**Table 1**

| No. | Component | Shear rate [s⁻¹] | Ratio of particles with particle size of 1 µm or more [particles/µm²] | Nb [mass%] | B₈ [T] | W_{17/50} [W/kg] |
|---|---|---|---|---|---|---|
| 1 | SnO₂ added | 5 | 0.0120 | 0.0060 | 1.948 | 0.775 |
| 2 | SnO₂ added | 10 | 0.0080 | 0.0060 | 1.937 | 0.803 |
| 3 | SnO₂ added | 14 | 0.0020 | 0.0020 | 1.939 | 0.798 |
| 4 | SnO₂ added | 15 | 0.0010 | <0.0010 | 1.943 | 0.768 |
| 5 | SnO₂ added | 20 | 0.0005 | <0.0010 | 1.948 | 0.755 |
| 6 | SnO₂ added | 25 | 0.0000 | <0.0010 | 1.950 | 0.750 |
| 7 | No SnO₂ added | 5 | - | 0.0070 | 1.935 | 0.808 |
| 8 | No SnO₂ added | 10 | - | 0.0070 | 1.947 | 0.778 |
| 9 | No SnO₂ added | 15 | - | 0.0070 | 1.945 | 0.783 |
| 10 | No SnO₂ added | 20 | - | 0.0070 | 1.935 | 0.808 |
| 11 | No SnO₂ added | 25 | - | 0.0070 | 1.950 | 0.770 |

As indicated in the table, when SnO₂ was added, Nb was less than 10 mass ppm (0.0010 mass%), and purification was accelerated, especially when the stirring was performed at a shear rate of 15 s⁻¹ or higher.

Although the mechanism of the acceleration of purification is not necessarily clear, we consider as follows.

It is known that in the secondary recrystallization annealing, Nb precipitates as NbN and enhances of the capability of inhibitors to inhibit the grain growth of the steel sheet microstructure. However, NbN decomposes in the purification annealing which is performed at a higher temperature, and N and Nb each form a solute. When SnO₂ is added during the purification annealing, Nb₂O₅ is more stable than SnO₂, so the following reaction occurs in the surface layer of the steel sheet. As a result, Nb is oxidized, and the purification is accelerated.

4Nb + 5SnO₂ -> 2Nb₂O₅ + 5Sn

The oxidation reaction leads to a gradient in Nb activity and the diffusion of Nb. It is believed that Nb is therefore incorporated as Nb₂O₅ into the film and into the annealing separator, thereby accelerating the purification.

To evaluate the dispersion state of SnO₂, after applying the annealing separator to the steel sheet and performing baking, the surface of the steel sheet was observed under a scanning electron microscope at a magnification of 2000x, where about ten fields of view with a size of about 750 µm² were selected and observed.

FIG. 1 illustrates the results of observing the dispersion state of SnO₂ when the annealing separator was added with SnO₂ and then stirred at shear rates of 10 s⁻¹ and 15 s⁻¹, respectively.

As illustrated in FIG. 1, when the shear rate was slow, SnO₂ particles with a particle size of 1 µm or more were observed everywhere. On the other hand, when the shear rate was high, few such particles were observed. Specifically, when the stirring was performed at a shear rate of 10 s⁻¹, the ratio of SnO₂ particles with a particle size of 1 µm or more was about 0.0080 particles/µm², and when the stirring was performed at a shear rate of 15 s⁻¹, the ratio was 0.0010 particles/µm² or less.

The results indicate that, when the shear rate was slow during the stirring after the addition of SnO₂, SnO₂ agglomerated, resulting in uneven distribution, and the ratio of SnO₂ particles with a particle size of 1 µm or more did not fall below 0.0010 particles/µm². As a result, the oxidation of Nb was not uniform, and the purification was not accelerated.

Next, the chemical composition of the annealing separator of the present disclosure will be described.

In the present disclosure, a metal compound such as SnO₂ is an important component for accelerating the purification of the steel sheet. When the content is less than 1 part by mass with respect to 100 parts by mass of MgO, the effect is insufficient. On the other hand, when the content exceeds 10 parts by mass, the ratio of MgO is reduced, which deteriorates the film properties and, in turn, the magnetic properties. Therefore, the present disclosure specifies the content to a range of 1 part by mass to 10 parts by mass.

The metal compound in the present disclosure is decomposed by an element used as an inhibitor, and if the metal in the metal compound has oxides, hydroxides, nitrates and sulfates, any of these metal compounds can be suitably used. This is because the element used as an inhibitor is expected to be incorporated as a compound into the film and into the annealing separator in place of the metal of the metal compound, thereby accelerating the purification.

More specifically, the metal compound is at least one of oxide, hydroxide, nitrate, and sulfate of at least one selected from the group consisting of Ti, Cr, Mo, W, Mn, Zn, Sn, Pb, Sb, and Bi.

In the present disclosure, previously known oxides, hydroxides, borates, carbonates, nitrates, phosphates, sulfates, and halogenides of Li, Na, Mg, Al, Si, K, Ca, Ti, V, Fe, Co, Ni, Cu, Sr, Ba, and lanthanoids can also be added to the annealing separator, for the purpose of improving the film properties and the magnetic properties.

These compounds may be used alone or in combination. When such a compound is used, the content is preferably in a range of 0.01 parts by mass to 15 parts by mass with respect to 100 parts by mass of MgO. When the content is less than 0.01 parts by mass, the effect is insufficient. On the other hand, when the content is more than 15 parts by mass, the formation of the film is excessively accelerated, and the inhibiting capability described above is excessively enhanced, resulting in deterioration of the magnetic properties.

Next, the chemical composition of the steel slab will be described.

C is an important element for improving the texture. When the content is less than 0.01 mass%, the effect is insufficient. On the other hand, when the content exceeds 0.1 mass%, decarburization is difficult, and the magnetic properties are deteriorated. Therefore, the present disclosure specifies the content to a range of 0.01 mass% to 0.1 mass%.

Si is an important element for increasing the specific resistance and improving the eddy current loss properties. When the content is less than 2.0 mass%, the effect is insufficient. On the other hand, when the content exceeds 5.0 mass%, the cold rolling properties are deteriorated. Therefore, the present disclosure specifies the content to a range of 2.0 mass% to 5.0 mass%.

Mn, like Si, increases the specific resistance and improves the eddy current loss properties. It is also an important element for improving the hot rolling properties. When the content is less than 0.01 mass%, the effect is insufficient. On the other hand, when the content exceeds 1 mass%, γ transformation is induced, and the magnetic properties are deteriorated. Therefore, the present disclosure specifies the content to a range of 0.01 mass% to 1 mass%.

Ti, Zr, Hf, V, Nb, and Ta are important elements for enhancing the inhibiting capability described above and improving the magnetic properties. When the total content is less than 0.0010 mass%, the effect is insufficient. On the other hand, when the total content exceeds 0.0100 mass%, the purification is difficult. Therefore, the present disclosure specifies the total content of at least one selected from the group consisting of Ti, Zr, Hf, V, Nb and Ta to a range of 0.0010 mass% to 0.0100 mass%.

MnS, MnSe, AlN, and the like, which are commonly used in grain-oriented electrical steel sheets, can also be used as inhibitors in the present disclosure. In the case of using MnS or MnSe, it is desirable to add 0.01 mass% to 1 mass% of Mn, and 0.002 mass% to 0.03 mass% of S or 0.002 mass% to 0.03 mass% of Se. On the other hand, in the case of using AlN, it is desirable to add 0.004 mass% to 0.04 mass% of Al and 0.002 mass% to 0.01 mass% of N. The above inhibitors may be used alone or in combination.

In addition to the above components, at least one of the following elements may be added as appropriate, in mass%: B: 0.0001 % to 0.005 %, P: 0.005 % to 0.1 %, Cr: 0.01 % to 0.5 %, Ni: 0.01 % to 1.5 %, Cu: 0.01 % to 0.5 %, Mo: 0.005 % to 0.1 %, Sn: 0.005 % to 0.5 %, Sb: 0.005 % to 0.5 %, and Bi: 0.001 % to 0.05 %, for the purpose of improving the magnetic properties.

Next, a method for manufacturing a grain-oriented electrical steel sheet according to the present disclosure will be described.

A steel slab adjusted to the suitable chemical composition as described above is, according to a conventional method, subjected to hot rolling, hot-rolled sheet annealing if necessary, and cold rolling once or twice or more with intermediate annealing performed therebetween, to obtain the final sheet thickness, then decarburization annealing is performed, and then an annealing separator, in which 1 part by mass to 10 parts by mass of a metal compound is added with respect to 100 parts by mass of MgO, is applied. Although there is no particular limitation on the method of stirring in the present disclosure, it is preferable to adjust the shear rate by changing the rotational speed when using a stirring blade, or by changing the discharge pressure when using a static mixer, for example. During the stirring, it is preferable to stir at a shear rate of 15 s⁻¹ or higher. This is to ensure that the ratio of metal compound particles with a particle size of 1 µm or more is 0.0010 particles/µm² or less, as observed from the steel sheet surface. The ratio of the metal compound particles is preferably 0.0005 particles/µm² or less. On the other hand, the lower limit is not particularly limited and may be 0 particles/µm². The shear rate is more preferably is 20 s⁻¹ or higher. On the other hand, the upper limit is not particularly limited, but industrially it is about 300 s⁻¹.

Further, after the decarburization annealing, nitriding treatment may be performed if necessary, which is advantageous in improving the magnetic properties.

Next, secondary recrystallization annealing is performed followed by purification annealing, and, if necessary, insulation coating, flattening annealing, and magnetic domain refining treatment are performed to obtain a grain-oriented electrical steel sheet, which is a final product.

In the production method of the present disclosure, any matter not described in this specification may follow a conventional method.

### EXAMPLES

### (Example 1)

Steel slabs containing, in mass%, C: 0.03 %, N: 0.004 %, Al: 0.007 %, Si: 3.2 %, Mn: 0.06 %, and Nb: 0.0050 %, with the balance being Fe and inevitable impurities, were heated at 1380 °C for 30 minutes, and then subjected to hot rolling, then cold rolling, then intermediate annealing at 1050 °C for 1 minute, and then cold rolling again to obtain cold-rolled sheets with a thickness of 0.23 mm. The cold-rolled sheets were subjected to decarburization annealing at 840 °C for 2 minutes in a wet hydrogen atmosphere to obtain decarburization annealed sheets. An annealing separator, where each oxide listed in Table 2 was added as a metal compound with respect to 100 parts by mass of MgO and the annealing separator was stirred at the shear rate listed in Table 2, was applied to each of the obtained decarburization annealed sheets. Next, secondary recrystallization annealing was performed at 850 °C for 50 hours, and then purification annealing was performed at 1200 °C for 5 hours. Next, a coating mainly composed of phosphate was applied, and then flattening annealing was performed at 850 °C for 1 minute to obtain test pieces.

Next, the test pieces were subjected to magnetic property measurement, and Nb analysis was performed after removing the film. The magnetic property measurement was performed in accordance with JISC2550, and the component analysis was performed by emission spectrochemical analysis.

The results of the measurement and analysis are listed in Table 2.

### [Table 2]

**Table 2**

| No. | Addition | Addition amount [part by mass] | Shear rate [s⁻¹] | Ratio of particles with particle size of 1 µm or more [particles/µm²] | Nb [mass%] | B₈ [T] | W_{17/50} [W/kg] | Remarks |
|---|---|---|---|---|---|---|---|---|
| 1 | TiO₂ | 5 | 20 | 0.0005 | <0.0010 | 1.948 | 0.755 | Example |
| 2 | Cr₂O₃ | 5 | 20 | 0.0003 | <0.0010 | 1.943 | 0.768 | Example |
| 3 | Mo(OH)₄ | 5 | 20 | 0.0002 | <0.0010 | 1.939 | 0.778 | Example |
| 4 | WO₃ | 5 | 20 | 0.0003 | <0.0010 | 1.940 | 0.775 | Example |
| 5 | Mn(NO₃)₂ | 5 | 20 | 0.0002 | <0.0010 | 1.935 | 0.788 | Example |
| 6 | ZnSO₄ | 5 | 20 | 0.0002 | <0.0010 | 1.947 | 0.758 | Example |
| 7 | Pb(OH)₂ | 5 | 20 | 0.0004 | <0.0010 | 1.936 | 0.785 | Example |
| 8 | Sb₂(SO₄)₃ | 5 | 20 | 0.0002 | <0.0010 | 1.949 | 0.753 | Example |
| 9 | Bi₂O₃ | 5 | 20 | 0.0002 | <0.0010 | 1.948 | 0.755 | Example |
| 10 | MnO₂ | 5 | 25 | 0.0001 | <0.0010 | 1.950 | 0.750 | Example |
| 11 | ZnO | 5 | 30 | 0.0000 | <0.0010 | 1.944 | 0.765 | Example |
| 12 | SnO₂ | 1 | 20 | 0.0002 | <0.0010 | 1.941 | 0.773 | Example |
| 13 | SnO₂ | 2 | 20 | 0.0003 | <0.0010 | 1.947 | 0.758 | Example |
| 14 | SnO₂ | 5 | 20 | 0.0004 | <0.0010 | 1.938 | 0.780 | Example |
| 15 | SnO₂ | 8 | 20 | 0.0003 | <0.0010 | 1.948 | 0.755 | Example |
| 16 | SnO₂ | 10 | 20 | 0.0005 | <0.0010 | 1.944 | 0.765 | Example |
| 17 | SnO₂ | 15 | 20 | 0.0005 | <0.0010 | 1.919 | 0.828 | Comparative Example |
| 18 | None | - | 20 | - | 0.0050 | 1.936 | 0.805 | Comparative Example |

As indicated in the table, when the method of the present disclosure is used, the amount of Nb is sufficiently reduced (Nb is sufficiently purified), and the magnetic properties are improved.

### (Example 2)

Steel slabs containing the various components listed in Table 3 were heated at 1380 °C for 30 minutes, and then subjected to hot rolling, then cold rolling, then intermediate annealing at 1050 °C for 1 minute, and then cold rolling again to obtain cold-rolled sheets with a thickness of 0.23 mm. The cold-rolled sheets were subjected to decarburization annealing at 840 °C for 2 minutes in a wet hydrogen atmosphere to obtain decarburization annealed sheets. An annealing separator, where 5 parts by mass of MoOs was added as a metal compound with respect to 100 parts by mass of MgO and the annealing separator was stirred at a shear rate of 15 s⁻¹, was applied to each of the obtained decarburization annealed sheets. Next, secondary recrystallization annealing was performed at 850 °C for 50 hours, and then purification annealing was performed at 1200 °C for 5 hours. Next, a coating mainly composed of phosphate was applied, and then flattening annealing was performed at 850 °C for 1 minute to obtain test pieces. The ratio of particles with a particle size of 1 µm or more was 0.0010 [particles/µm²] or less in all test pieces.

Next, the test pieces were subjected to magnetic property measurement, and component analysis was performed after removing the film. The magnetic property measurement was performed in accordance with JISC2550, and the component analysis was performed by emission spectrochemical analysis.

The results of the measurement and analysis are listed in Table 3.

### [Table 3]

**Table 3**

| No. | Component [mass%] | | | | Ratio of particles with particle size of 1 µm or more [particles/µm²] | Component analysis result [mass%] | | | | | | B₈ [T] | W_{17/50} [W/kg] | Remarks |
|---|---|---|---|---|---|---|---|---|---|---|---|---|---|---|
| | C | Si | Mn | Others | | Ti | V | Zr | Nb | Hf | Ta | | | |
| 1 | 0.09 | 3.7 | 0.09 | Ti:0.0030,N:0.009,Al0.02,S:0.006,Se:0.02,Sb:0.02 | 0.0007 | <0.0010 | <0.0010 | <0.0010 | <0.0010 | <0.0010 | <0.0010 | 1.958 | 0.730 | Example |
| 2 | 0.05 | 3.5 | 0.04 | V:0.0030,N:0. 004,Al:0.007,P:0.05,Cu:0.1,S:0.002 | 0.0006 | <0.0010 | <0.0010 | <0.0010 | <0.0010 | <0.0010 | <0.0010 | 1.943 | 0.768 | Example |
| 3 | 0.06 | 3.7 | 0.04 | Zr:0.0020,N:0.009,Al0.02,S:0.010Nr.0.2,Sn:0.06 | 0.0006 | <0.0010 | <0.0010 | <0.0010 | <0.0010 | <0.0010 | <0.0010 | 1.957 | 0.733 | Example |
| 4 | 0.08 | 3.0 | 0.03 | Nb:0.0040,N:0.008,Al0.02,Se:0.01 | 0.0008 | <0.0010 | <0.0010 | <0.0010 | <0.0010 | <0.0010 | <0.0010 | 1.956 | 0.735 | Example |
| 5 | 0.06 | 3.6 | 0.08 | Hf:0.0090,B:0.003,N:0.006,Al:0.03,Ni:0.02,Se:0.03 | 0.0008 | <0.0010 | <0.0010 | <0.0010 | <0.0010 | <0.0010 | <0.0010 | 1.956 | 0.735 | Example |
| 6 | 0.05 | 3.1 | 0.03 | Ta:0.0100,N:0.006,Al:0.009,Sn:0.009,Sb:0.06,Bi0.01 | 0.0008 | <0.0010 | <0.0010 | <0.0010 | <0.0010 | <0.0010 | <0.0010 | 1.937 | 0.783 | Example |
| 7 | 0.06 | 3.9 | 0.08 | Ti:0.0030,Nb:0.0030,N:0. W4,A10.007,Cu:0.4,S:0.002,Ni0.3 | 0.0007 | <0.0010 | <0.0010 | <0.0010 | <0.0010 | <0.0010 | <0.0010 | 1.937 | 0.783 | Example |
| 8 | 0.04 | 3.6 | 0.03 | Zr:0.0020,Ta:0.0050,B:0.005,N:0.006,A10.009,Sn0.2 | 0.0009 | <0.0010 | <0.0010 | <0.0010 | <0.0010 | <0.0010 | <0.0010 | 1.941 | 0.773 | Example |
| 9 | 0.08 | 3.5 | 0.09 | Ti:0.0020,V:0.0030,Hf:0.0050,N:0.009,A10.02,Se:0.02 | 0.0006 | <0.0010 | <0.0010 | <0.0010 | <0.0010 | <0.0010 | <0.0010 | 1.956 | 0.735 | Example |
| 10 | 0.05 | 3.2 | 0.06 | V:0.00050,N:0.004,Al:0.009,P:0.07,Sn:0.02 | 0.0006 | <0.0010 | <0.0010 | <0.0010 | <0.0010 | <0.0010 | <0.0010 | 1.918 | 0.830 | Comparative Example |
| 11 | 0.07 | 3.3 | 0.04 | Ti:0.0120,N:0.008,Al:0.002,S:0.003,Se:0.03 | 0.0007 | 0.0040 | <0.0010 | <0.0010 | <0.0010 | <0.0010 | <0.0010 | 1.937 | 0.803 | Comparative Example |
| 12 | 0.03 | 3.0 | 0.06 | Nb:0.0070,Hf:0.0050,N:0.004,Al:0.007,P:0.05,Bi:0.01 | 0.0007 | <0.0010 | <0.0010 | <0.0010 | 0.0030 | 0.0020 | <0.0010 | 1.936 | 0.805 | Comparative Example |

As indicated in the table, when the method of the present disclosure is used, the amount of each element is sufficiently reduced (each element is sufficiently purified), and the magnetic properties are improved.

## Claims

1. A method for producing a grain-oriented electrical steel sheet, comprising: preparing a steel slab containing, in mass%, C: 0.01 % to 0.1 %, Si: 2.0 % to 5.0 %, and Mn: 0.01 % to 1 %, and further containing at least one selected from the group consisting of Ti, Zr, Hf, V, Nb, and Ta in a total amount of 0.0010 % to 0.0100 %, with the balance being Fe and inevitable impurities, subjecting the steel slab to hot rolling, to cold rolling once or twice or more with intermediate annealing performed therebetween, and then to decarburization annealing, then applying an annealing separator, and performing final annealing, wherein
the annealing separator is added with 1 part by mass to 10 parts by mass of a metal compound with respect to 100 parts by mass of MgO, and the annealing separator is applied on a surface of the steel sheet with a ratio of particles with a particle size of 1 µm or more in the metal compound being 0.0010 particles/µm² or less.

2. The method for producing a grain-oriented electrical steel sheet according to claim 1, wherein the metal compound is at least one of oxide, hydroxide, nitrate, or sulfate of at least one selected from the group consisting of Ti, Cr, Mo, W, Mn, Zn, Sn, Pb, Sb, and Bi.

3. The method for producing a grain-oriented electrical steel sheet according to claim 1 or 2, wherein the steel slab further contains, in mass%, at least one selected from the group consisting of B: 0.0001 % to 0.005 %, N: 0.002 % to 0.01 %, Al: 0.004 % to 0.04 %, P: 0.005 % to 0.1 %, S: 0.002 % to 0.03 %, Cr: 0.01 % to 0.5 %, Ni: 0.01 % to 1.5 %, Cu: 0.01 % to 0.5 %, Se: 0.002 % to 0.03 %, Mo: 0.005 % to 0.1 %, Sn: 0.005 % to 0.5 %, Sb: 0.005 % to 0.5 %, and Bi: 0.001 % to 0.05 %.
